# EUROPÄISCHE PATENTSCHRIFT

(11) **EP 2 574 754 B1**
(45) Veröffentlichungstag und Bekanntmachung des Hinweises auf die Patenterteilung: **03.05.2017**
(21) Anmeldenummer: 12006014.0
(22) Anmeldetag: 23.08.2012
(51) Int. Cl.: F02B 37/18

(54) **Ventileinrichtung, Turbolader mit Ventileinrichtung, Brennkraftmaschine mit Turbolader und Fahrzeug mit Brennkraftmaschine**
Valve device, turbocharger with valve device, combustion engine with turbocharger and vehicle with combustion engine
Dispositif de soupape, turbosoufflante avec dispositif de soupape, moteur à combustion avec turbosoufflante et véhicule automobile avec moteur à combustion

(30) Priorität: 27.08.2011 DE 102011111817
(43) Veröffentlichungstag der Anmeldung: 03.04.2013
(73) Patentinhaber: Volkswagen Aktiengesellschaft, 38440 Wolfsburg (DE)
(72) Erfinder: Künstner, Marko, 38368 Rennau (DE)

(56) Entgegenhaltungen:
- WO-A1-2005/008041
- DE-A1-102009 050 182
- JP-A- H08 334 030
- JP-A- 2005 226 591
- JP-U- S6 133 923

## Beschreibung

Ventileinrichtung, Turbolader mit Ventileinrichtung, Brennkraftmaschine mit Turbolader und Fahrzeug mit Brennkraftmaschine Die Erfindung betrifft eine Ventileinrichtung, insbesondere zur Verwendung in einem Gehäuse eines Turboladers, beispielsweise ein Bypassventil oder Wastegate, umfassend zumindest zwei relativ zueinander bewegliche Elemente und ein zwischen den Elementen angeordnetes Dämpfungselement. Weiterhin betrifft die Erfindung einen Turbolader, eine Brennkraftmaschine und ein Fahrzeug.

Eine Ventilvorrichtung ist ein technisches Bauteil, das dazu dient, den Ein- oder Auslass von Gasen oder Flüssigkeiten zu kontrollieren oder die Fließrichtung zu steuern oder zu regeln. Bei Fahrzeugen mit einem Turbolader ist ein Bypassventil oder Wastegate bekannt, welches dazu dient, den Ladedruck zu regeln. Dazu wird das im Abgasstrom angeordnete Bypassventil beim Erreichen eines eingestellten Ladedrucks durch eine Betätigungseinrichtung geöffnet. So wird ein Teil des Abgasstroms oder der gesamte Abgasstrom an der Turbine vorbei direkt in den Auspuff geführt, was ein weiteres Ansteigen der Turbinendrehzahl unterbindet.

Eine Vorrichtung der genannten Art ist aus der WO 2010/135104 A2 bekannt. Diese zeigt einen Turbolader mit einer Ventilvorrichtung. Die Ventilvorrichtung umfasst einen Ventilteller, einen Ventilhebel, eine Ventilachse, ein Achslager und einen Betätigungshebel. Die Ventilachse ist in dem Achslager drehbeweglich angeordnet und mit dem Ventilhebel und dem Betätigungshebel zueinander unbeweglich verbunden. Mittels eines Federelements wird der Ventilteller kraftschlüssig mit dem Ventilhebel verbunden.

Aus der Druckschrift WO 2005/008041 A1 ist ein weiterer Turbolader mit einer Ventilvorrichtung bekannt. Mittels einer Feder wird zwischen der Ventilachse und dem Achslager eine axial wirkende Spannung aufgebracht, wodurch eine an dem Ventilhebel angeordnete Verschleißscheibe abdichtend gegen das Achslager gedrückt und mit diesem kraftschlüssig verbunden wird. Die Feder ist hierzu zwischen dem Achslager und der Ventilachse bzw. dem Betätigungshebel angeordnet. Die Federkraft kompensiert Verschleiß und Wärmedehnung in der Ventilvorrichtung. Durch den formschlüssigen Kontakt der zueinander beweglichen Elemente der Ventilvorrichtung werden Vibrationen übertragen.

Aus der Druckschrift JP H08 334030 A ist ein Ventilvorrichtung eines Turboladers bekannt bei der das Spiel zwischen Ventilarm, Dichtscheibe und Lagerbuchse der Ventilwelle durch den im Turbinengehäuse vorherrschenden Überdruck beseitigt wird, da das Abgas die Anordnung in axialer Richtung nach Außen drückt.

Des Weiteren ist im Dokument DE 10 2006 021 185 A1 eine Verschlussklappe für einen Abgasturbolader zum Verschließen eines Strömungskanals beschrieben, deren Verschlussdeckel mittels eines Betätigungsarms schwenkbar ist. Der Betätigungsarm weist eine Nut auf, in welche ein an den Verschlussdeckel angeforderter erhabener Bereich eingreift, wobei radial außerhalb der Nut von einem Bereich des Betätigungsarms ein Anschlag ausgebildet ist. Aufgrund des zusätzlichen radialen Formschlusses nimmt die Reibung des Verschlussdeckels gegenüber dem Betätigungsarm und somit auch die Dämpfung bereits ohne ein zusätzliches Dämpfungselement zu, so dass ein dynamisches Hämmern der Verschlussklappe reduziert werden kann.

Und schließlich ist aus der JP 2005 226591 A eine in einem Wastegate eines Abgasturboladers genutzte Ventileinrichtung mit einem Klappenventil, das einen Ventilteller, einen Ventilhebel, eine Ventilachse, einen Betätigungshebel und ein Betätigungselement umfasst, bekannt. Dabei ist der Ventilteller axial beweglich in einem Zwischenstück gehalten, das wiederum in einer Öffnung des Ventilhebels gelagert ist. Dabei ist beidseitig des Zwischenstücks ein Spalt vorgesehen. Das Zwischenstück dient als Dämpfungselement, um eine Geräuschentwicklung zu unterdrücken.

Der Erfindung liegt die Aufgabe zugrunde, eine Ventileinrichtung, einen Turbolader, eine Brennkraftmaschine und ein Fahrzeug der eingangs genannten Art derart auszuführen, dass die Übertragung von Vibrationen und damit einhergehende akustische Effekte langfristig, vorzugsweise dauerhaft, minimiert werden.

Diese Aufgabe wird gelöst mit einer Ventileinrichtung gemäß den Merkmalen des Anspruchs 1. Die abhängigen Ansprüche betreffen besonders zweckmäßige Weiterbildungen der Erfindung.

Die erfindungsgemäße Ventileinrichtung umfasst zumindest zwei relativ zueinander bewegliche Elemente und wenigstens ein zwischen den relativ zueinander beweglichen Elementen angeordnetes, insbesondere zusätzliches Dämpfungselement, welches in zumindest einem Funktionszustand der Ventileinrichtung unbelastet ist. Erfindungsgemäß ist also eine Ventilvorrichtung vorgesehen, bei der das zwischen relativ zueinander beweglichen Elementen der Ventileinrichtung angeordnete Dämpfungselement in zumindest einem Funktionszustand der Ventilvorrichtung unbelastet, insbesondere spannungsfrei, vorspannungsfrei ist. Durch die freie, also nicht vorgespannte, beispielsweise frei bewegliche Anordnung des Dämpfungselements können Vibrationen zwischen den Elementen und daraus resultierende akustische Emissionen reduziert und gedämpft werden.

Die erfindungsgemäße Ventileinrichtung umfasst einen Ventilteller, einen Ventilhebel, eine Ventilachse, ein Achslager, eine Betätigungseinrichtung und/oder einen Betätigungshebel als Elemente. Dabei kann der Ventilteller mittels des Ventilhebels der Ventilachse zugeordnet und/oder die Betätigungseinrichtung kann direkt oder mittels eines Betätigungshebels mit der Ventilachse verbunden sein. Gemäß der Erfindung ist die Ventilachse, der Ventilhebel und/oder der Betätigungshebel relativ zueinander unbeweglich miteinander verbunden.

Das Dämpfungselement ist erfindungsgemäß zwischen dem Achslager und einem der Elemente Ventilachse, Ventilhebel, Betätigungseinrichtung oder Betätigungshebel angeordnet.

Die akustischen Effekte entstehen in der Regel, wenn sich zwei Elemente bei einer Relativbewegung zueinander berühren. Dies geschieht vor allem bei vibrationsbedingten Relativbewegungen in radialer, aber insbesondere in axialer Richtung. Das erfindungsgemäße Dämpfungselement entkoppelt die Elemente akustisch weitgehend voneinander. Dadurch, dass das Dämpfungselement frei, also nicht vorgespannt ist, liegen auch die Elemente der Ventilvorrichtung nicht zwangsweise aneinander an. Das Dämpfungselement wird erst ab einer bestimmten Annäherung der Elemente beansprucht. Ein frei angeordnetes Dämpfungselement hat gegenüber anderen Dämpfungselementen eine erhöhte Verschleißfestigkeit.

Als Funktionszustände der Ventilvorrichtung sind bekannt eine Schließstellung bei geschlossener Ventilvorrichtung, eine Offenstellung bei vollständig, d.h. maximal geöffneter Ventilvorrichtung und zumindest eine Übergangsstellung, welche die Ventilvorrichtung beim Wechsel zwischen Schließ- und Offenstellung oder umgekehrt einnimmt oder durchfährt. Die Ventilvorrichtung befindet sich auch in einer Übergangsstellung, wenn die Ventilvorrichtung nur teilweise geöffnet gehalten wird.

Beim Ventilteller weisen in der Schließstellung der Ventilteller und der Ventilhebel, in der Offenstellung der Ventilhebel und die Krempe ihre dichteste Annäherung auf. In der Schließstellung und in der Offenstellung sind das Achslager und die Ventilachse am stärksten in entgegengesetzte Richtungen gegeneinander verdreht.

Ein weiteres Dämpfungselement kann auch an anderer Position der Ventileinrichtung angeordnet sein. So ist es zum Beispiel möglich, dass ein Dämpfungselement zwischen dem Ventilteller und dem Ventilhebel vorgesehen ist. Erfindungswesentlich ist es, dass das Dämpfungselement aus zumindest einem Federelement, insbesondere aus einem Metall, besteht. Aufgrund der hohen Temperaturen im Bereich eines Bypassventils für eine Abgasleitung und der hohen Anforderungen hinsichtlich, der Elastizität haben sich vor allem metallische Werkstoffe als äußerst praktikabel erwiesen. Das Dämpfungselement muss für seine Funktion eine Dichtigkeit des Systems Ventilachse mit Achslager gegenüber Fluiden nicht sicherstellen. So kann das Dämpfungselement beispielsweise als eine Zahnscheibe ausgeführt sein, die ohne Verbindung zu den Elementen lose an der Ventilvorrichtung angeordnet ist.

Eine vorteilhafte Ausführungsform der Erfindung betrifft eine Ventileinrichtung, bei der zumindest eine Seite des Dämpfungselements mit zumindest einem der Elemente verbunden ist. So kann es schon mit geringem materiellen Aufwand möglich sein, die akustischen Effekte der Ventileinrichtung zu minimieren.

Eine andere Ausführungsform betrifft ein Dämpfungselement, welches mit keinem der Elemente verbunden ist, sondern an diesen axial beweglich anliegt. Vor einer Berührung der Elemente in axialer Richtung wird dann beispielsweise zunächst das Dämpfungselement an die Ventilachse und den Ventilarm angelegt.

Bei einer Sonderform der Erfindung besteht das Dämpfungselement aus zwei Federelementen, die zueinander beabstandet zumindest an einem gemeinsamen Element angeordnet und/oder mit diesem verbunden sind. Die beiden Federelemente können dazu auf derselben Seite und/oder an gegenüberliegenden Seiten des Ventilhebels und/oder des Achslager positioniert sein.

Das Dämpfungselement und das diesem zugeordnete Element können auch formschlüssig miteinander verbunden sein. Hierdurch wird es möglich, eine Berührung der Elemente in axialer Richtung untereinander zu minimieren. Dieser Formschluss kann beispielsweise mittels einer Nut realisiert sein, in die ein Haken des Dämpfungselements eingreift.

Erfindungsgemäß ist ein Turbolader, insbesondere Abgasturbolader, für eine Brennkraftmaschine vorgesehen, der eine Ladedruckregelungseinrichtung hat, welche eine erfindungsgemäße Ventileinrichtung aufweist. Hierdurch ist es möglich, die Übertragung von Vibrationen und damit einhergehende akustische Effekte langfristig, vorzugsweise dauerhaft, zu minimieren.

Vibrationen an der Ventileinrichtung eines Turboladers entstammen unterschiedlichen Quellen. So können beispielsweise die hohe Rotationsfrequenz von Turbine und Verdichter, die Schwingung der Brennkraftmaschine und/oder die Pulsation des Abgases ursächlich sein.

Der Turbolader umfasst ein Gehäuse, einen Verdichter und eine Turbine. Über einen Frischgaseinlass strömt Frischgas aus der Atmosphäre in den Verdichter. Ein Abgasauslass lässt das Abgas von der Brennkraftmaschine in die Atmosphäre strömen. Nach dem Verdichter wird das Frischgas durch eine Frischgasleitung zu der Brennkraftmaschine geführt. Durch eine Abgasleitung gelangt das Abgas aus der Brennkraftmaschine zu der Turbine. Der Turbolader hat weiterhin eine Ladedruckregelungseinrichtung. Eine Ladedruckregelungseinrichtung kann in unterschiedlicher Weise ausgeführt sein. Häufig wird über eine Ventileinrichtung ein Teil des aus der Brennkraftmaschine dem Turbolader zugeführten Abgasstroms an der Turbine vorbei in den Abgasauslass geführt. Ein solcher Bypass wird auch Wastegate genannt. Es sind verschiedene Techniken bekannt, die Ventileinrichtung anzusteuern. Beispielsweise kann eine mit der Frischgasleitung verbundene Druckdose auf die Betätigungseinrichtung der Ventileinrichtung einwirken.

Erfindungsgemäß ist eine Brennkraftmaschine vorgesehen, umfassend und/oder verbunden mit einem erfindungsgemäßen Turbolader. Hierdurch ist es möglich, dass die Übertragung von Vibrationen und damit einhergehende akustische Effekte langfristig, vorzugsweise dauerhaft, minimiert werden. Eine derartige Brennkraftmaschine kann in einer stationären Anlage, beispielsweise einem Blockheizkraftwerk oder einem Fahrzeug, beispielsweise einem Flugzeug, einem Schiff, einer Lokomotive, einem Traktor, einem Lastkraftwagen und/oder einem Personenkraftwagen, eingesetzt sein. Die Brennkraftmaschine umfasst in einer bevorzugten Ausführungsform zumindest einen Brennraum, welcher durch einen Zylinder, einen Zylinderkopf und einen in dem Zylinder beweglichen Kolben begrenzt ist. Die Brennkraftmaschine hat darüber hinaus einen Abgaskrümmer, über den Abgas aus dem Brennraum die Brennkraftmaschine verlässt. Für die Zuführung von Frischgas in die Brennkraftmaschine hat diese eine Frischgasverteilung. Die Frischgasleitung des Turboladers ist mit der Frischgasverteilung der Brennkraftmaschine verbunden und die Abgasleitung des Turboladers ist mit dem Abgaskrümmer der Brennkraftmaschine verbunden. In einer abweichenden Ausführungsform können der Abgaskrümmer und die Abgasleitung beziehungsweise die Frischgasleitung und die Frischgasverteilung einteilig ausgeführt sein.

Erfindungsgemäß ist ein Fahrzeug vorgesehen, welches mit einer erfindungsgemäßen Brennkraftmaschine ausgestattet ist. Hierdurch ist es möglich, die Übertragung von Vibrationen und damit einhergehende akustische Effekte langfristig, vorzugsweise dauerhaft, zu minimieren. Dies wirkt sich auch auf das Komfortempfinden in dem Fahrgastraum eines Personenkraftwagens vorteilhaft aus.

Die Erfindung lässt zahlreiche Ausführungsformen zu. Zur weiteren Verdeutlichung ihres Grundprinzips sind einige davon in der Zeichnung dargestellt und werden nachfolgend beschrieben. Diese zeigt in
- Fig. 1: eine schematische Darstellung eines Ausschnitts eines Turboladers mit einer ersten Ausführungsform einer Ventileinrichtung;
- Fig. 2: eine schematische Darstellung einer zweiten Ausführungsform der Ventileinrichtung;
- Fig. 3: eine schematische Darstellung einer dritten Ausführungsform der Ventileinrichtung;
- Fig. 4: eine schematische Darstellung einer vierten Ausführungsform der Ventileinrichtung;
- Fig. 5: eine schematische Darstellung einer fünften Ausführungsform der Ventileinrichtung;
- Fig. 6: eine schematische Darstellung einer sechsten Ausführungsform der Ventileinrichtung;
- Fig. 7: eine schematische Darstellung einer siebten Ausführungsform der Ventileinrichtung;
- Fig. 8: eine schematische Darstellung einer achten Ausführungsform der Ventileinrichtung;

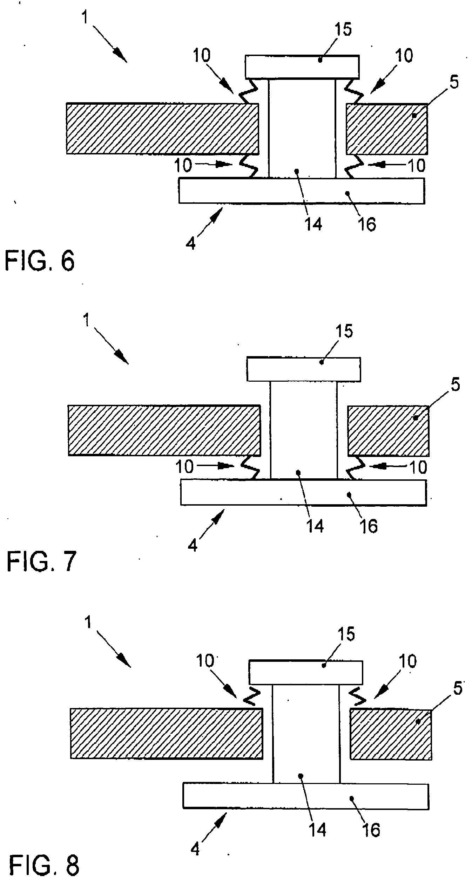

- Fig. 8: eine schematische Darstellung einer neunten Ausführungsform der Ventileinrichtung;

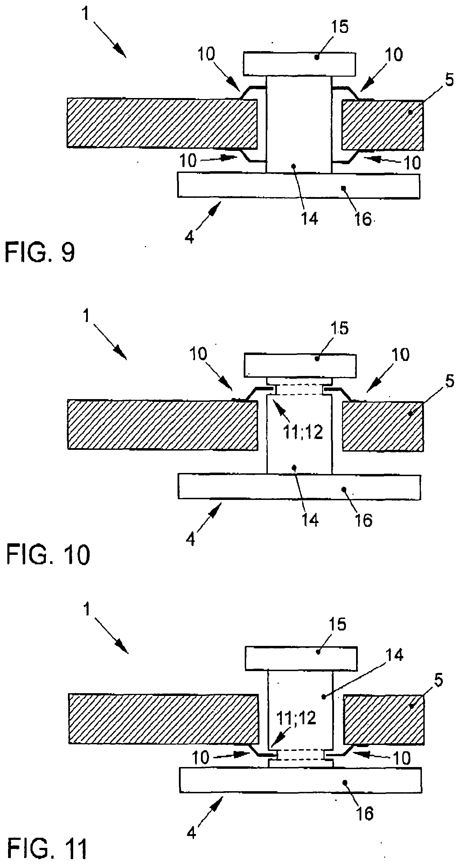

- Fig. 10: eine schematische Darstellung einer zehnten Ausführungsform der Ventileinrichtung;
- Fig. 11: eine schematische Darstellung einer elften Ausführungsform der Ventileinrichtung;

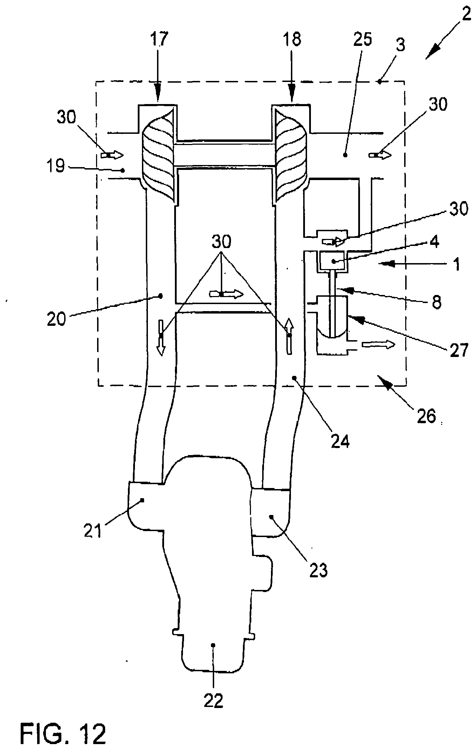

- Fig. 12: eine schematische Darstellung einer ersten Ausführungsform eines Turboladers mit der Ventileinrichtung;

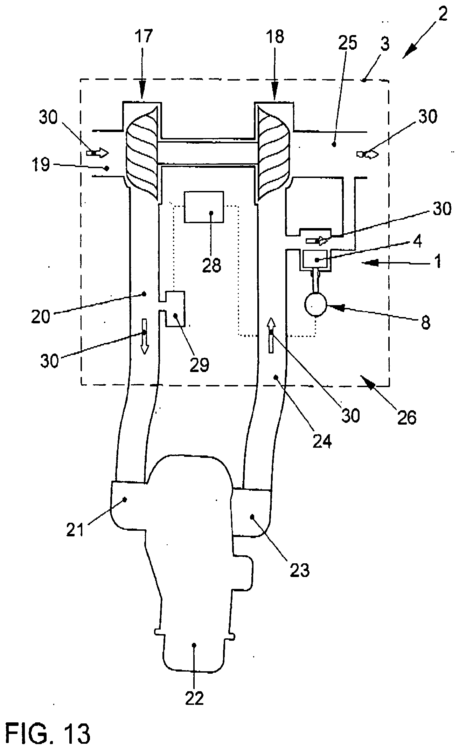

- Fig. 13: eine schematische Darstellung einer zweiten Ausführungsform eines Turboladers mit der Ventileinrichtung;

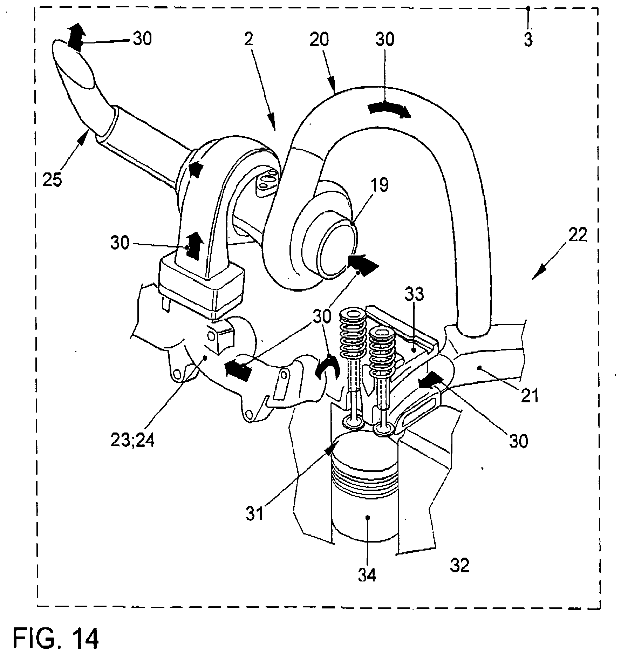

- Fig. 14: eine schematische Darstellung einer Brennkraftmaschine mit dem Turbolader;

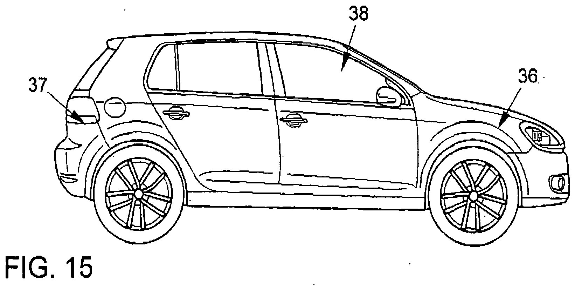

- Fig. 15: eine schematische Darstellung eines Fahrzeugs mit der Brennkraftmaschine.

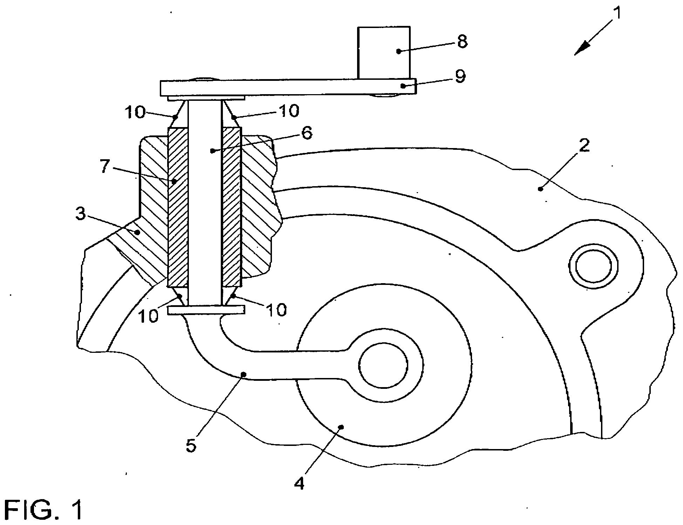

Figur 1 zeigt eine Ventileinrichtung 1 eines Turboladers 2. Der Turbolader 2 ist schematisch in einem Ausschnitt angedeutet. Ein Abschnitt des Gehäuses 3 des Turboladers 2 ist geschnitten dargestellt. Die Elemente 4 bis 9 der Ventileinrichtung 1 sind ein Ventilteller 4, ein Ventilhebel 5, eine Ventilachse 6, ein Achslager 7, eine Betätigungseinrichtung 8 und ein Betätigungshebel 9. Die Ventilachse 6 ist in dem Achslager 7 drehbeweglich angeordnet. Das Achslager 7 ist hier in der gezeigten Ausführungsform als eigenständiges Bauteil dargestellt. Es ist genauso möglich, dass das Achslager 7 integraler Bestandteil des Gehäuses 3 und einstückig mit diesem ausgebildet ist. Der Ventilteller 4 ist mittels des Ventilhebels 5 der Ventilachse 6 beweglich und die Betätigungseinrichtung 8 ist in der gezeigten Ausführungsform mittels eines Betätigungshebels 9 mit der Ventilachse 6 verbunden. Dabei sind die Ventilachse 6, der Ventilhebel 5 und der Betätigungshebel 8 relativ zueinander unbeweglich. Zur akustischen Entkopplung ist zwischen den Elementen 5 und 7 beziehungsweise zwischen den Elementen 7 und 9 der Ventileinrichtung 1 ein Dämpfungselement 10 angeordnet.

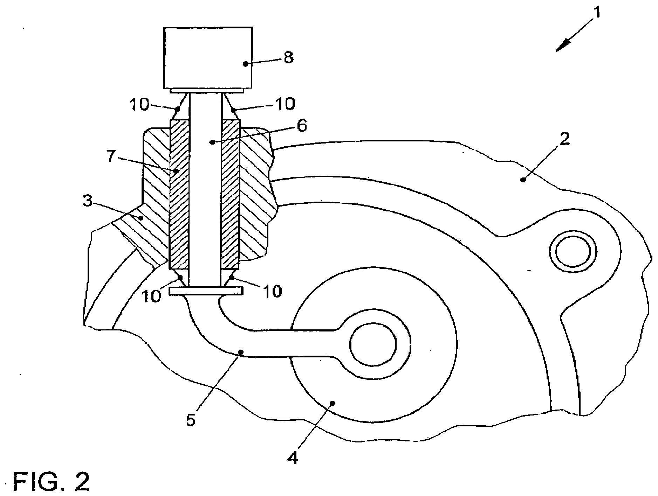

Figur 2 zeigt eine weitere Ausführungsform der in Figur 1 beschriebenen Ventileinrichtung 1. Bei dieser Ausführungsform ist die Betätigungseinrichtung 8 direkt mit der Ventilachse 6 verbunden, wobei die Betätigungseinrichtung 8 und die Ventilachse 6 relativ zueinander drehbeweglich sind. Das Dämpfungselement 10 ist dabei zwischen den Elementen 5 und 7 beziehungsweise zwischen den Elementen 7 und 8 der Ventileinrichtung 1 angeordnet.

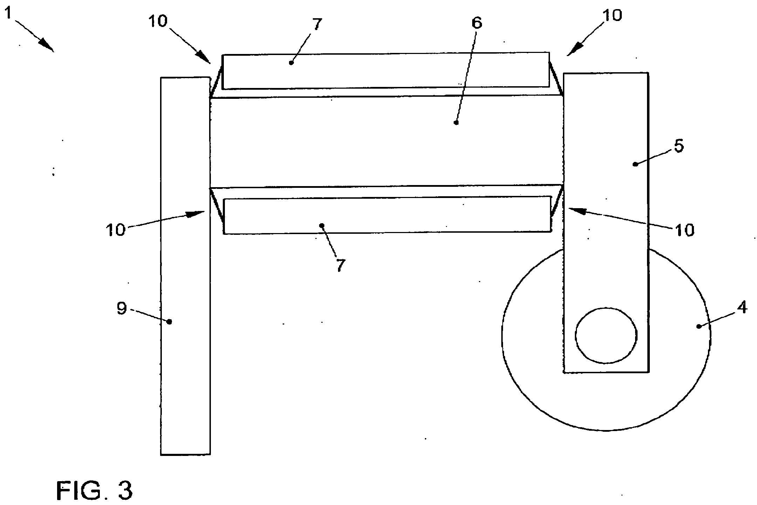

Figur 3 zeigt eine schematische Darstellung der in Figur 1 beschriebenen Ventileinrichtung 1. Bei dieser dritten Ausführungsform der Ventileinrichtung 1 liegt ein Dämpfungselement 10 an dem Ventilhebel 5, an der Ventilachse 6, an dem Achslager 7 und an dem Betätigungshebel 9 frei beweglich an.

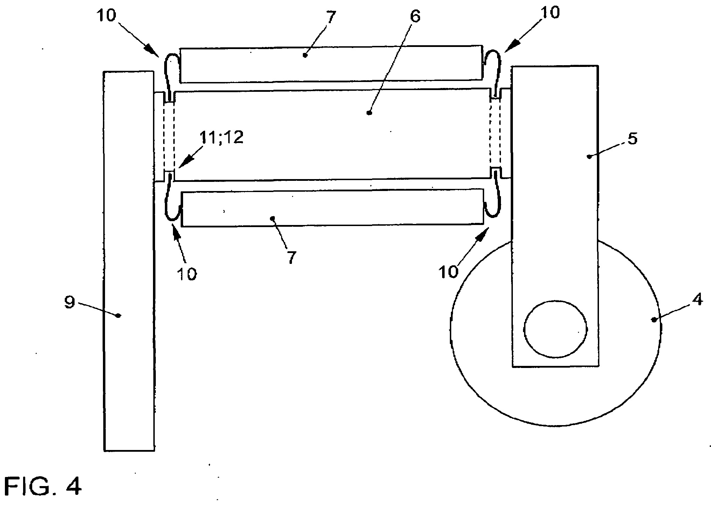

Figur 4 zeigt eine schematische Darstellung der in Figur 1 beschriebenen Ventileinrichtung 1. Bei dieser vierten Ausführungsform der Ventileinrichtung 1 ist das Dämpfungselement 10 formschlüssig mit der Ventilachse 6 verbunden. Dazu hat die Ventilachse 6 beidseitig jeweils eine umlaufende Nut 11, in die ein Haken 12 des Dämpfungselements 10 eingreift. Das Dämpfungselement 10 liegt an dem Achslager 7 frei beweglich an. Das Dämpfungselement 10 besteht dabei aus zwei ringförmigen Federelementen, die beidseitig des Achslagers 7 angeordnet sind.

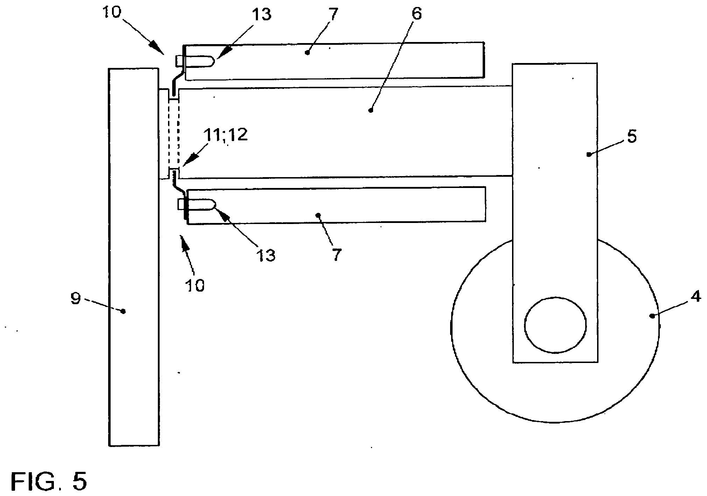

Figur 5 zeigt eine schematische Darstellung einer Weiterbildung der in Figur 4 beschriebenen Ventileinrichtung 1. Bei dieser fünften Ausführungsform der Ventileinrichtung 1 besteht das Dämpfungselement 10 aus lediglich einem ringförmigen Federelement, welches formschlüssig mit der Ventilachse 6 und dem Achslager 7 verbunden ist. Dazu hat die Ventilachse 6 eine umlaufende Nut 11, in die ein Haken 12 des Dämpfungselements 10 eingreift. Das Dämpfungselement 10 und das Achslager 7 sind über ein Verbindungsmittel verbunden. Das Verbindungsmittel kann eine Verklebung, ein Niet, eine Schweißnaht oder, wie angedeutet, eine Schraube 13 sein. Aufgrund der festen Verbindung des Dämpfungselements 10 mit beiden Elementen 6, 7 der Ventileinrichtung 1 ist die einseitige Anordnung nur eines Federelements ausreichend, da ein derart festgelegtes Dämpfungselement 10 axiale Vibrationen aus beiden Richtungen aufnimmt.

Figur 6 zeigt eine schematische Darstellung eines Ausschnitts der in Figur 1 beschriebenen Ventileinrichtung 1 mit einem Ventilteller 4 und einem Ventilhebel 5. Bei dieser sechsten Ausführungsform umfasst der Ventilteller 4 einen Bolzen 14 mit einer Krempe 15 und einen Teller 16. An dem Bolzen 14 liegt der Ventilhebel 5 frei beweglich an. Die Beweglichkeit des Ventilhebels 5 wird durch den Teller 16 und die Krempe 15 begrenzt. Zwischen den Elementen 4 und 5 der Ventileinrichtung 1 ist beiderseitig des Ventilhebels 5 ein frei bewegliches Dämpfungselement 10 angeordnet. Das Dämpfungselement 10 besteht aus ringförmigen, nicht vorgespannten Federelementen, die beide an dem Ventilhebel anliegen und von denen das eine an der Krempe 15 und das andere an dem Teller 16 anliegt.

Die Figuren 7 und 8 zeigen eine schematische Darstellung einer Weiterbildung der in Figur 6 beschriebenen Ventileinrichtung 1. Diese siebte und achte Ausführungsform hat jeweils ein Dämpfungselement 10 mit jeweils nur einem Federelement. Das jeweilige Federelement ist auf dem Bolzen frei beweglich. Das in Figur 7 gezeigte Dämpfungselement 10 liegt an dem Ventilhebel 5 und am Teller 16 an. Figur 8 zeigt ein Dämpfungselement 10, welches an dem Ventilhebel 5 und an der Krempe 15 anliegt.

Figur 9 zeigt eine schematische Darstellung einer Weiterbildung der in Figur 6 beschriebenen Ventileinrichtung 1. Bei dieser neunten Ausführüngsform liegen die beiderseitig des Ventilhebels 5 angeordneten Federelemente des Dämpfungselements 10 an dem Bolzen frei beweglich an. Die Dämpfungswirkung des Dämpfungselements 10 wird bezüglich einer axialen Vibration erst erreicht, wenn eines der Federelemente an die Krempe 15 oder an den Teller 16 bewegt wurde.

Die Figuren 10 und 11 zeigen eine schematische Darstellung einer Weiterbildung der in Figur 6 beschriebenen Ventileinrichtung 1. Diese zehnte und elfte Ausführungsform hat jeweils ein Dämpfungselement 10 mit jeweils nur einem Federelement. Das jeweilige Federelement hat einen Haken 12, der in eine umlaufende Nut 11 des Bolzens 14 eingreift. So sind der Bolzen 14 und das Dämpfungselement 10 formschlüssig verbunden. Der Ventilhebel 5 und das Dämpfungselement 10 sind vorzugsweise nicht miteinander verbunden.

Figuren 12 und 13 zeigen schematische Darstellungen zweier Ausführungsformen des erfindungsgemäßen Turboladers 2. Der Turbolader 2 umfasst ein durch eine unterbrochene Linie angedeutetes Gehäuse 3, einen Verdichter 17 und eine Turbine 18. Über einen Frischgaseinlass 19 kann Frischgas aus der Atmosphäre in den Verdichter 17 strömen. Nach dem Verdichter 17 gelangt das Frischgas durch eine Frischgasleitung 20 zu einer Frischgasverteilung 21 einer Brennkraftmaschine 22. Das Abgas aus der Brennkraftmaschine 22 gelangt über einen Abgaskrümmer 23 und eine Abgasleitung 24 zu der Turbine 18. Nach der Turbine 18 strömt das Abgas über einen Abgasauslass 25 in die Atmosphäre. Der Turbolader 2 hat weiterhin eine Ladedruckregelungseinrichtung 26, welche eine Ventileinrichtung 1 mit einer Betätigungseinrichtung 8 umfasst. Die Pfeile 30 deuten die Strömungsrichtung von Frischgas und Abgas an.

Die in Figur 12 dargestellte erste Ausführungsform der Ladedruckregelungseinrichtung 26 hat eine mit der Frischgasleitung 20 verbundene Druckdose 27. Die Druckdose 27 ist mit der Betätigungseinrichtung 8 verbunden. Der Gasdruck in der Frischgasleitung 20 wirkt mittels der Druckdose 27 und der Betätigungseinrichtung 8 auf einen Ventilteller 4 der Ventileinrichtung 1.

Die in Figur 13 dargestellte zweite Ausführungsform der Ladedruckregelungseinrichtung 26 hat eine elektronische Steuerungseinrichtung 28, die mit einem Drucksensor 29 und einer elektromechanischen Betätigungseinrichtung 8 verbunden ist. Von der Steuerungseinrichtung 28 wird der an dem Drucksensor 29 erfasste Gasdruck in der Frischgasleitung 20 ausgewertet und die Betätigungseinrichtung 8 angesteuert. Die Betätigungseinrichtung 8 wirkt auf einen Ventilteller 4 der Ventileinrichtung 1 und verstellt diesen.

Figur 14 zeigt eine schematische Darstellung einer Brennkraftmaschine 22 und eines in den Figuren 12 und 13 dargestellten Turboladers 2. Die Brennkraftmaschine 22 umfasst zumindest einen Brennraum 31. Der Brennraum 31 ist begrenzt durch die innere Oberfläche eines Zylinders 32 und durch die einander zugewandten Oberflächen eines Zylinderkopfs 33 und eines in dem Zylinder 32 beweglichen Kolbens 34. In dem Brennraum 31 wird beim Betrieb der Brennkraftmaschine 22 das Frischgas gemeinsam mit einem Brennstoff in Abgas umgewandelt. Durch die dabei frei werdende Energie wird der Kolben 34 in dem Zylinder 32 bewegt. Diese mechanische Bewegungsenergie wird beispielsweise zum Antrieb eines in Figur 15 dargestellten Fahrzeugs 35 genutzt. Das in die Brennkraftmaschine 22 eindringende Frischgas gelangt über eine Frischgasverteilung 21 in den Brennraum 31. Über einen Abgaskrümmer 23 wird das Abgas aus dem Brennraum 31 und aus der Brennkraftmaschine 22 geleitet. Der Turbolader 2 ist mit der Brennkraftmaschine 22 verbunden. In der gezeigten Ausführungsform bilden die Brennkraftmaschine 22 und der Turbolader 2 eine gemeinsame Baugruppe als ein einheitliches Handelsgut. Die mechanische Verbindung von Turbolader 2 und Brennkraftmaschine 22 ist mittels eines Flansches möglich. In der dargestellten Ausführungsform sind der Turbolader 2 und die Brennkraftmaschine 22 in einem gemeinsamen Gehäuse 3 angeordnet. Das Gehäuse 3 ist mittels einer unterbrochenen Linie angedeutet. Für den Gasaustausch zwischen Turbolader 2 und Brennkraftmaschine 22 ist die Frischgasleitung 20 des Turboladers 2 mit der Frischgasverteilung 21 der Brennkraftmaschine 22 verbunden und die Abgasleitung 24 des Turboladers 2 und der Abgaskrümmer 23 der Brennkraftmaschine 22 sind einteilig ausgeführt. Der Frischgaseinlass 19 und der Abgasauslass 25 sind in den Figuren 12 und 13 beschrieben. Die Strömungsrichtung von Frischgas und Abgas ist durch die Pfeile 30 angedeutet.

Figur 15 zeigt eine schematische Darstellung eines Fahrzeugs 35, das mit einer in den Figuren 12, 13 und 14 gezeigten Brennkraftmaschine 22 ausgestattet ist. Das Fahrzeug 35 hat einen Frontraum 36, einen Heckraum 37 und einen Fahrgastraum 38. Die Brennkraftmaschine 22 ist in dem Heckraum 37 oder üblicherweise in dem Frontraum 36 positioniert.

**Bezugszeichenliste**

| | | | |
|---|---|---|---|
| 1 | Ventileinrichtung | 21 | Frischgasverteilung |
| 2 | Turbolader | 22 | Brennkraftmaschine |
| 3 | Gehäuse | 23 | Abgaskrümmer |
| 4 | Ventilteller | 24 | Abgasleitung |
| 5 | Ventilhebel | 25 | Abgasauslass |
| 6 | Ventilachse | 26 | Ladedruckregelungseinrichtung |
| 7 | Achslager | 27 | Druckdose |
| 8 | Betätigungseinrichtung | 28 | Steuerungseinrichtung |
| 9 | Betätigungshebel | 29 | Drucksensor |
| 10 | Dämpfungselement | 30 | Pfeil |
| 11 | Nut | 31 | Brennraum |
| 12 | Haken | 32 | Zylinder |
| 13 | Schraube | 33 | Zylinderkopf |
| 14 | Bolzen | 34 | Kolben |
| 15 | Krempe | 35 | Fahrzeug |
| 16 | Teller | 36 | Frontraum |
| 17 | Verdichter | 37 | Heckraum |
| 18 | Turbine | 38 | Fahrgastraum |
| 19 | Frischgaseinlass | | |
| 20 | Frischgasleitung | | |

## Patentansprüche

1. Ventileinrichtung (1) umfassend einen Ventilteller (4), ein Achslager (7), eine Ventilachse (6), einen unbeweglich mit der Ventilachse (6) verbundenen Ventilhebel (5), eine Betätigungseinrichtung (8) und/oder einen unbeweglich mit der Ventilachse (6) verbundenen Betätigungshebel (9), wobei die Ventilachse (6) in dem Achslager (7) drehbeweglich angeordnet ist, wobei wenigstens ein in axialer Richtung der Ventilachse (6) wirkendes Dämpfungselement (10), das zwischen dem Achslager (7) und einem der Elemente Ventilachse (6), Ventilhebel (5), Betätigungseinrichtung (8) oder Betätigungshebel (9) angeordnet ist, wobei das Dämpfungselement (10) in zumindest einem Funktionszustand der Ventileinrichtung (1) unbelastet ist und aus zumindest einem Federelement besteht.

2. Ventileinrichtung (1) nach Anspruch 1, **dadurch gekennzeichnet, dass** der Ventilteller (4) mittels des Ventilhebels (5) der Ventilachse (6) zugeordnet ist.

3. Ventileinrichtung (1) nach zumindest einem der vorangehenden Ansprüche, **dadurch gekennzeichnet, dass** die Betätigungseinrichtung (8) direkt oder mittels des Betätigungshebels (9) mit der Ventilachse (6) verbunden ist.

4. Ventileinrichtung (1) nach zumindest einem der vorangehenden Ansprüche, **dadurch gekennzeichnet, dass** ein weiteres Dämpfungselement (10) zwischen dem Ventilteller (4) und dem Ventilhebel (5) angeordnet ist.

5. Ventileinrichtung (1) nach zumindest einem der vorangehenden Ansprüche, **dadurch gekennzeichnet, dass** das Dämpfungselement (10) aus einem Metall besteht.

6. Ventileinrichtung (1) nach zumindest einem der vorangehenden Ansprüche, **dadurch gekennzeichnet, dass** zumindest eine Seite des Dämpfungselements (10) mit zumindest einem der Elemente Achslager (7), Ventilachse (6), Ventilhebel (5), Betätigungseinrichtung (8) oder Betätigungshebel (9) verbunden ist.

7. Turbolader (2) für eine Brennkraftmaschine (22), umfassend ein Gehäuse (3), einen Verdichter (17), eine Turbine (18), einen Frischgaseinlass (19), über den Frischgas aus der Atmosphäre in den Verdichter (17) strömt, einen Abgasauslass (25), über den Abgas von der Brennkraftmaschine (22) in die Atmosphäre strömt, eine Frischgasleitung (20), durch die Frischgas von dem Verdichter (17) zu der Brennkraftmaschine (22) gelangt, eine Abgasleitung (24), durch die das Abgas aus der Brennkraftmaschine (22) zu der Turbine (2) gelangt und eine Ladedruckregelungseinrichtung (26) mit einer Ventileinrichtung (1) gemäß zumindest einem der Ansprüche 1 bis 6.

8. Turbolader (2) nach Anspruch 7, **dadurch gekennzeichnet, dass** der Turbolader ein Abgasturbolader ist.

9. Turbolader (2) nach Anspruch 7 oder 8, **dadurch gekennzeichnet, dass** sich die Ventilachse (6) der Ventileinrichtung (1) durch das Gehäuse (3) erstreckt und dass die Ventileinrichtung (1) wenigstens zwei Dämpfungselemente (10) ausweist, wobei eines der zwei Dämpfungselemente (10) außerhalb des Gehäuses (3) und das andere der zwei Dämpfungselemente (10) innerhalb des Gehäuses (3) angeordnet ist.

10. Brennkraftmaschine (22) umfassend zumindest einen Brennraum (31), welcher durch einen Zylinder (32), einen Zylinderkopf (33) und einen in dem Zylinder (32) beweglichen Kolben (34) begrenzt ist, einen Abgaskrümmer (23), über den Abgas aus dem Brennraum (31) die Brennkraftmaschine (22) verlässt, eine Frischgasverteilung (21), über die in die Brennkraftmaschine (22) eindringendes Frischgas dem Brennraum (31) zugeführt wird, und einem Turbolader (2) gemäß Anspruch 8, 9 oder 10, wobei die Frischgasleitung (20) des Turboladers (2) mit der Frischgasverteilung (21) der Brennkraftmaschine (22) und die Abgasleitung (24) des Turboladers (2) mit dem Abgaskrümmer (23) der Brennkraftmaschine (22) verbunden und/oder einteilig ausgeführt ist.

11. Fahrzeug (35) mit einer Brennkraftmaschine (22) gemäß Anspruch 11.

12. Fahrzeug (35) nach Anspruch 11, **dadurch gekennzeichnet, dass** das Fahrzeug (35) ein Personen- und/oder Lastkraftwagen ist.

## Claims

1. Valve device (1) comprising a valve disk (4), a spindle bearing (7), a valve spindle (6), a valve lever (5) which is connected immovably to the valve spindle (6), an actuation device (8) and/or an actuation lever (9) which is connected immovably to the valve spindle (6), wherein the valve spindle (6) is arranged in rotationally movable fashion in the spindle bearing (7), wherein at least one damping element (10) which acts in an axial direction of the valve spindle (6) and which is arranged between the spindle bearing (7) and one of the elements of valve spindle (6), valve lever (5), actuation device (8) or actuation lever (9), wherein the damping element (10) is unloaded in at least a functional state of the valve device (1) and is composed of at least one spring element.

2. Valve device (1) according to Claim 1, **characterized in that** the valve disk (4) is assigned by means of the valve lever (5) to the valve spindle (6).

3. Valve device (1) according to at least one of the preceding claims, **characterized in that** the actuation device (8) is connected directly or by means of the actuation lever (9) to the valve spindle (6).

4. Valve device (1) according to at least one of the preceding claims, **characterized in that** a further damping element (10) is arranged between the valve disk (4) and the valve lever (5).

5. Valve device (1) according to at least one of the preceding claims, **characterized in that** the damping element (10) is composed of a metal.

6. Valve device (1) according to at least one of the preceding claims, **characterized in that** at least one side of the damping element (10) is connected to at least one of the elements of spindle bearing (7), valve spindle (6), valve lever (5), actuation device (8) or actuation lever (9).

7. Turbocharger (2) for an internal combustion engine (22), comprising a housing (3), a compressor (17), a turbine (18), a fresh-gas inlet (19) via which fresh gas flows from the atmosphere into the compressor (17), an exhaust-gas outlet (25) via which exhaust gas flows from the internal combustion engine (22) into the atmosphere, a fresh-gas line (20) through which fresh gas passes from the compressor (17) to the internal combustion engine (22), an exhaust line (24) through which the exhaust gas passes from the internal combustion engine (22) to the turbine (2), and a charge-pressure regulating device (26) with a valve device (1) according to at least one of Claims 1 to 6.

8. Turbocharger (2) according to Claim 7, **characterized in that** the turbocharger is an exhaust-gas turbocharger.

9. Turbocharger (2) according to Claim 7 or 8, **characterized in that** the valve spindle (6) of the valve device (1) extends through the housing (3), and **in that** the valve device (1) has at least two damping elements (10), wherein one of the two damping elements (10) is arranged outside the housing (3) and the other of the two damping elements (10) is arranged within the housing (3).

10. Internal combustion engine (22) comprising at least one combustion chamber (31), which is delimited by a cylinder (32), by a cylinder head (33) and by a piston (34) movable in the cylinder (32), an exhaust manifold (23), via which exhaust gas from the combustion chamber (31) exits the internal combustion engine (22), a fresh-gas distributor (21), via which fresh gas entering the internal combustion engine (22) is supplied to the combustion chamber (31), and a turbocharger (2) according to Claim 8, 9 or 10, wherein the fresh-gas line (20) of the turbocharger (2) is connected to and/or formed in one piece with the fresh-gas distributor (21) of the internal combustion engine (22), and the exhaust line (24) of the turbocharger (2) is connected to and/or formed in one piece with the exhaust manifold (23) of the internal combustion engine (22).

11. Vehicle (35) having an internal combustion engine (22) according to Claim 11.

12. Vehicle (35) according to Claim 11, **characterized in that** the vehicle (35) is a passenger motor vehicle and/or heavy goods motor vehicle.

## Revendications

1. Dispositif de soupape (1) comprenant un plateau de soupape (4), un palier d'axe (7), un axe de soupape (6), un levier de soupape (5) relié de manière fixe à l'axe de soupape (6), un dispositif d'actionnement (8) et/ou un levier d'actionnement (9) relié de manière fixe à l'axe de soupape (6), l'axe de soupape (6) étant disposé à rotation dans le palier d'axe (7),
au moins un élément d'amortissement (10) qui agit dans la direction axiale de l'axe de soupape (6) et disposé entre le palier d'axe (7) et un des éléments axe de soupape (6), levier de soupape (5), dispositif d'actionnement (8) ou levier d'actionnement (9), l'élément d'amortissement (10) étant délesté dans au moins un état de fonctionnement du dispositif de soupape (1) et étant constitué d'au moins un élément élastique.

2. Dispositif de soupape (1) selon la revendication 1, **caractérisé en ce que** le plateau de soupape (4) est associé à l'axe de soupape (6) au moyen du levier de soupape (5).

3. Dispositif de soupape (1) selon au moins l'une des revendications précédentes, **caractérisé en ce que** le dispositif d'actionnement (8) est relié directement ou au moyen du levier d'actionnement (9) à l'axe de soupape (6).

4. Dispositif de soupape (1) selon au moins l'une des revendications précédentes, **caractérisé en ce qu'**un autre élément d'amortissement (10) est disposé entre le plateau de soupape (4) et le levier de soupape (5).

5. Dispositif de soupape (1) selon au moins l'une des revendications précédentes, **caractérisé en ce que** l'élément d'amortissement (10) est constitué d'un métal.

6. Dispositif de soupape (1) selon au moins l'une des revendications précédentes, **caractérisé en ce qu'**au moins un côté de l'élément d'amortissement (10) est relié à au moins l'un des éléments palier de soupape (7), axe de soupape (6), levier de soupape (5), dispositif d'actionnement (8) ou levier d'actionnement (9).

7. Turbocompresseur (2) pour moteur à combustion interne (22), comprenant un boîtier (3), un compresseur (17), une turbine (18), une admission (19) de gaz frais, par laquelle du gaz frais provenant de l'atmosphère pénètre dans le compresseur (17), un échappement (25) de gaz d'échappement par lequel les gaz d'échappement provenant du moteur à combustion interne (22) s'écoule dans l'atmosphère, un conduit (20) de gaz frais par lequel le gaz frais provenant du compresseur (17) aboutit dans le moteur (22) à combustion interne, un conduit (24) de gaz d'échappement par lequel les gaz d'échappement provenant du moteur (22) à combustion interne aboutissent dans la turbine (2) et un dispositif (26) de régulation de la pression de suralimentation doté d'un dispositif de soupape (1) selon au moins l'une des revendications 1 à 6.

8. Turbocompresseur (2) selon la revendication 7, **caractérisé en ce que** le turbocompresseur est un turbocompresseur des gaz d'échappement.

9. Turbocompresseur (2) selon les revendications 7 ou 8, **caractérisé en ce que** l'axe de soupape (6) du dispositif de soupape (1) traverse le boîtier (3) et **en ce que** le dispositif de soupape (1) présente au moins deux éléments d'amortissement (10), l'un des deux éléments d'amortissement (10) étant disposé à l'extérieur du boîtier (3) et l'autre des deux éléments d'amortissement (10) étant disposé à l'intérieur du boîtier (3).

10. Moteur (22) à combustion interne comprenant au moins une chambre de combustion (31) délimitée par un cylindre (32), une tête de cylindre (33) et un piston (34) mobile dans le cylindre (32), un coude (23) à gaz d'échappement par lequel les gaz d'échappement provenant de la chambre de combustion (31) quittent le moteur (22) à combustion interne, un répartiteur (21) de gaz frais par lequel du gaz frais pénétrant dans le moteur (22) à combustion interne est amené à la chambre de combustion (31) et un turbocompresseur (2) selon les revendications 8, 9 ou 10, le conduit (20) de gaz d'échappement du turbocompresseur (2) étant relié et/ou réalisé d'un seul tenant avec le répartiteur (21) de gaz frais du moteur (22) à combustion interne et le conduit (24) de gaz d'échappement du turbocompresseur (2) étant relié et/ou réalisé d'un seul tenant avec le coude (23) de gaz d'échappement du moteur (22) à combustion interne.

11. Véhicule (35) doté d'un moteur (22) à combustion interne selon la revendication 11.

12. Véhicule (35) selon la revendication 11, **caractérisé en ce que** le véhicule (35) est une voiture automobile et/ou un camion.
